# EUROPÄISCHE PATENTSCHRIFT

(11) **EP 2 569 811 B1**
(45) Veröffentlichungstag und Bekanntmachung des Hinweises auf die Patenterteilung: **30.07.2014**
(21) Anmeldenummer: 11716383.2
(22) Anmeldetag: 27.04.2011
(51) Int. Cl.: H01M 2/10, H01M 10/04, H01M 10/60, H01M 2/02

(54) **ENERGIESPEICHERMODUL AUS MEHREREN PRISMATISCHEN SPEICHERZELLEN UND VERFAHREN ZUR HERSTELLUNG EINES ENERGIESPEICHERMODULS**
ENERGY STORAGE MODULE COMPRISING SEVERAL PRISMATIC STORAGE CELLS AND METHOD FOR PRODUCING AN ENERGY STORAGE MODULE
MODULE D'ACCUMULATION D'ÉNERGIE CONSTITUÉ DE PLUSIEURS ÉLÉMENTS ACCUMULATEURS PRISMATIQUES ET PROCÉDÉ DE FABRICATION D'UN MODULE D'ACCUMULATION D'ÉNERGIE

(30) Priorität: 11.05.2010 DE 102010020065
(43) Veröffentlichungstag der Anmeldung: 20.03.2013
(73) Patentinhaber: Bayerische Motoren Werke Aktiengesellschaft, 80809 München (DE)
(72) Erfinder: WOESLE, Gerd, 80469 München (DE); LUSTIG, Robert, 81679 München (DE); GOESMANN, Hubertus, 89564 Nattheim-Auernheim (DE); PINT, Siegfried, 80807 München (DE); LÖFFLER, Robert, 85368 Moosburg (DE); WEILEDER, Stephan, 81371 München (DE)
(86) Internationale Anmeldenummer: PCT/EP2011/002101
(87) Internationale Veröffentlichungsnummer: WO 2011/141127

(56) Entgegenhaltungen:
- EP-A2- 2 065 963
- WO-A2-2010/040363
- DE-A1- 19 503 085
- DE-A1-102009 043 858
- US-A- 5 886 501
- US-A1- 2006 255 764

## Beschreibung

Die Erfindung betrifft ein Energiespeichermodul für eine aus einer Anzahl von Energiespeichermodulen aufgebaute Vorrichtung zur Spannungsversorgung, insbesondere eines Kraftfahrzeugs, wobei das Energiespeichermodul aus mehreren prismatischen Speicherzellen aufgebaut ist, die, zumindest in einer Reihe gestapelt, hintereinander angeordnet und zwischen zwei Endplatten über Zuganker verspannt sind. Dabei ist eine jeweilige Speicherzellen-Reihe durch einen die Speicherzellen-Reihe vollständig umlaufenden Isolationsmantel mit elektrischen Isolationseigenschaften von den Endplatten und den Zugankern getrennt, wobei die elektrischen Isolationseigenschaften des Isolationsmantels derart sind, dass dieser einen Berührschutz bezüglich einer durch die serielle Verschaltung aller Speicherzellen des Energiespeichermoduls erhaltenen Spannung und/oder bezüglich einer durch die serielle Verschaltung der Energiespeichermodule erhaltenen Spannung bereit stellt. Die Erfindung betrifft ferner ein Verfahren zur Herstellung eines solchen Energiespeichermoduls.

In einer üblicherweise als Batterie bezeichneten Vorrichtung zur Spannungsversorgung eines Kraftfahrzeugs kommt meist eine Mehrzahl an Energiespeichermodulen zum Antrieb von Fahrzeugen, beispielsweise von Elektrofahrzeugen oder Hybridfahrzeugen, zum Einsatz. Ein jeweiliges Energiespeichermodul besteht typischerweise aus mehreren gestapelten prismatischen Speicherzellen. Die einzelnen Speicherzellen enthalten elektrochemische Zellen der Batterie. Der Stapel aus den einzelnen Speicherzellen wird zumeist über eine mechanische Endplatte und Zuganker zu dem Energiespeichermodul verspannt. Die Endplatten und Zuganker dienen neben der mechanischen Fixierung der Module zueinander insbesondere dazu, eine Verformung durch Gasdruckänderungen, welche beim Betrieb in den im Inneren der Module angeordneten elektrochemischen Zellen auftreten, entgegenzuwirken. Derartige Energiespeichermodule benötigen in der Regel eine Kühlung, um die benötigte Betriebstemperatur sicherzustellen.

Aus der DE 10 2005 031 504 A1 ist ein Energiespeichermodul, bestehend aus mehreren Speicherzellen, bekannt, wobei wenigstens zwei der Speicherzellen zu dem Energiespeichermodul gestapelt und zwischen zwei Endplatten miteinander verspannt sind. Das als prismatische Batterie bezeichnete Energiespeichermodul umfasst weiter einen mit den Speicherzellen (die dort als Module bezeichnet sind) in Wärme leitendem Kontakt befindlichen Kühlkörper. Der Kühlkörper weist wenigstens eine Kühlrippe auf, welche parallel zur Kraftrichtung der Verspannung ausgebildet ist. Da die zumindest eine Kühlrippe als Zuganker dient, durch welche der Stapel an Speicherzellen miteinander verspannt gehalten werden kann, ist das Vorsehen zusätzlicher Zuganker entbehrlich. Nachteilig an der beschriebenen Anordnung ist der Umstand, dass die prismatischen Speicherzellen entsprechende Schlitze für die Kühlrippen aufweisen müssen. Hierdurch sind spezielle, aneinander angepasste Komponenten notwendig. Dadurch, dass die elektrischen Anschlüsse auf sich gegenüberliegenden Seiten der Speicherzellen vorgesehen sind, wird ferner während des Zusammenbaus die Handhabung hinsichtlich der elektrischen Sicherheit erschwert.

Aus den Druckschriften DE 195 03 085 A1, DE 10 2009 043 858 A1 und EP 2 065 963 A2 sind jeweils Energiespeichermodule der eingangs genannten Art bekannt, diese sind jedoch hinsichtlich ihrer Herstellbarkeit und dem erzielbaren elektrischen Berührschutz noch nicht optimal:

Es ist daher Aufgabe der vorliegenden Erfindung, ein Energiespeichermodul für eine aus einer Anzahl von Energiespeichermodulen aufgebaute Vorrichtung zur Spannungsversorgung anzugeben, das auf noch einfachere Weise herstellbar ist, wobei die Herstellung des Moduls ohne Beachtung besonderer Schutzmaßnahmen hinsichtlich eines elektrischen Berührschutzes durchgeführt werden können soll, und bei dem ein verbesserter Berührschutz realisiert ist. Es ist weiterhin Aufgabe der Erfindung, ein Verfahren zur Herstellung eines entsprechenden Energiespeichermoduls anzugeben.

Diese Aufgaben werden gelöst durch ein Energiespeichermodul gemäß den Merkmalen des Anspruches 1 sowie durch ein Verfahren gemäß den Merkmalen des Patentanspruches 15. Vorteilhafte Ausgestaltungen ergeben sich jeweils aus den abhängigen Patentansprüchen.

Die Erfindung schafft ein Energiespeichermodul für eine aus einer Anzahl von Energiespeichermodulen aufgebaute Vorrichtung zur Spannungsversorgung, insbesondere eines Kraftfahrzeugs, wobei das Energiespeichermodul aus mehreren prismatischen Speicherzellen aufgebaut ist, die, zumindest in einer Reihe gestapelt, hintereinander angeordnet und zwischen zwei Endplatten über Zuganker verspannt sind, wobei eine jeweilige Speicherzellenreihe durch einen die Speicherzellen-Reihe vollständig umlaufenden Isolationsmantel mit elektrischen Isolationseigenschaften von den Endplatten und den Zugankern getrennt ist, wobei die elektrischen Isolationseigenschaften des Isolationsmantels derart sind, dass dieser einen Berührschutz bezüglich einer durch die serielle Verschaltung aller Speicherzellen des Energiespeichermoduls erhaltenen Spannung und/oder bezüglich einer durch die serielle Verschaltung der Energiespeichermodule erhaltenen Spannung bereitstellt. Das Energiespeichermodul zeichnet sich dadurch aus, dass der Isolationsmantel aus zwei Mantelhälften gebildet ist, welche an ihren jeweiligen, einander zugewandten Enden überlappen.

Aufgrund des Vorsehens eines jeweiligen Isolationsmantels um eine Speicherzellen-Reihe kann das Energiespeichermodul ohne besondere Schutzmaßnahmen oder Beachtung bestimmter Sicherheitsvorschriften montiert werden, wodurch die Herstellung besonders effizient ist. Insbesondere wird durch den Isolationsmantel mit Blick auf die serielle Verschaltung der Energiespeichermodule eine Hochvolt-Sicherheit durch das Energiespeichermodul bereitgestellt. Dadurch, dass erfindungsgemäß der Isolationsmantel aus zwei Mantelhälften gebildet ist, welche an ihren jeweiligen, einander zugewandten Enden überlappen, ergibt sich eine leichtere Montage des Energiespeichermoduls, da das Einbringen der Speicherzellen in den Isolationsmantel - unabhängig von deren Verformung durch Gasdruckänderungen im Inneren - einfach ermöglicht wird. Weiter ist durch einen aus zwei Mantelhälften gebildeten Isolationsmantel der Ausgleich von Toleranzen möglich. Die Überlappung der jeweiligen, einander zugewandten Enden der Mantelhälften ermöglicht ferner die Einhaltung von Luft- und Kriechstrecken und sorgt damit für den geforderten elektrischen Isolationsschutz.

Gemäß einer zweckmäßigen Ausgestaltung ist der Isolationsmantel mit den Endplatten verklebt. Hierdurch wird während der Fertigung eine Verschiebung der Komponenten zueinander verhindert. Zusätzlich sorgt das Vorsehen der Verklebung nach dem späteren Einbau des Energiespeichermoduls, z.B. in ein Kraftfahrzeug, dafür, dass eine Bewegung der Speicherzellen innerhalb des Energiespeichermoduls minimiert wird. Dies begünstigt eine dauerhafte Funktionsfähigkeit des erfindungsgemäßen Energiespeichermoduls.

Gemäß einer weiteren zweckmäßigen Ausgestaltung ist der Isolationsmantel mit zumindest manchen der Speicherzellen verklebt. Auch hierdurch kann während der Fertigung eine Verschiebung der Komponenten zueinander verhindert werden. Die Verklebung von Speicherzellen mit dem Isolationsmantel unterbindet darüber hinaus ebenso eine Bewegung der Speicherzellen innerhalb des Energiespeichermoduls in dessen Betrieb, z.B. in einem Kraftfahrzeug.

Es ist weiterhin vorgesehen, dass zwischen in der Speicherzellen-Reihe aneinander grenzenden Speicherzellen zur elektrischen Isolation der Speicherzellen untereinander eine Klebeschicht oder eine Klebefolie oder ein um die Speicherzelle aufgebrachter Schrumpfschlauch vorgesehen ist. Neben der Hemmung der Bewegung der Komponenten zueinander wird hierdurch zusätzlich ein Niedervolt-Isolationsschutz zwischen den benachbarten Speicherzellen vorgesehen. Dies ermöglicht die unmittelbare Stapelung der Speicherzellen z.B. auch dann, wenn ein jeweiliger Mantel der Speicherzellen ein Spannung führendes Bauteil der Speicherzellen darstellt. Die Verwendung einer Klebeschicht an einer Klebefolie oder eines um die Speicherzelle aufgebrachten Schrumpfschlauchs zur Herstellung der Isolation ermöglicht darüber hinaus eine kompakte Anordnung der Speicherzellen hintereinander, so dass das Energiespeichermodul raumoptimiert bereitgestellt werden kann.

Gemäß einer weiteren zweckmäßigen Ausgestaltung weist der Isolationsmantel zusätzlich thermisch isolierende Eigenschaften auf. Dies verhindert, dass Kühlleistung eines mit dem Energiespeicher verbundenen Kühlers auf die Endplatten abfließt. Hierdurch ist eine verbesserte Kühlung der Speicherzellen möglich. Darüber hinaus ermöglichen die thermisch isolierenden Eigenschaften des Isolationsmantels die Verbindung von Zugankern und Endplatten mittels einer Verschweißung, um die hintereinander angeordneten Speicherzellen zu verspannen. Die thermisch isolierenden Eigenschaften des Isolationsmantels verhindern eine übermäßige Erwärmung der Speicherzellen, die ansonsten zu deren Beschädigung führen könnten.

Die Länge der Überlappung ist in Abhängigkeit der Anzahl und/oder der Dicke der Speicherzellen einer Speicherzellen-Reihe gewählt, so dass eine Montage auch unter ungünstigsten Umständen-d.h. alle Speicherzellen weisen eine maximale Verformung durch eine Gasdruckänderung auf - sichergestellt ist, um bei der später aufgebrachten Kraft zur Herstellung der Verspannung ein Zusammenschieben der überlappenden Enden zu ermöglichen. Wäre eine solche Überlappung unter den ungünstigsten Umständen nicht sichergestellt, so können die einander zugewandten Enden beim Aufbringen der Kraft zur Verspannung aufeinander treffen und eine relative Verschiebung zueinander verhindern. In diesem Fall könnte unter Umständen eine jeweilige Speicherzellenreihe nicht spielfrei zwischen den Endplatten eingebracht sein. Unter der Dicke einer Speicherzellenreihe wird hierbei die Länge der Erstreckung in Kraftrichtung der Verspannung verstanden.

Aus Kosten- und Herstellungsgründen ist es vorteilhaft, wenn die Mantelhälften als Gleichteile ausgebildet sind. Zum einen ergeben sich hierdurch Kostenvorteile aufgrund einer höheren Stückzahl einer einzelnen Komponente. Zum anderen muss beim Zusammenbau der einzelnen Komponenten nicht darauf geachtet werden, welcher Teil eines Isolationsmantels an welcher Stelle eingesetzt werden muss.

In einer weiteren Ausgestaltung der Erfindung sind die Speicherzellen des Energiespeichermoduls über eine Zellkontaktierungseinheit seriell und/oder parallel miteinander verbunden, wobei die Zellkontaktierungseinheit einen Träger umfasst, an dem mehrere Zellverbinder angeordnet sind, über die ein jeweiliges Anschlussterminal erster Polarität einer Speicherzelle mit einem jeweiligen Anschlussterminal zweiter Polarität einer benachbarten Speicherzelle elektrisch verbunden ist, so dass eine Gesamtspannung des Energiespeichermoduls zwischen zwei Anschlusskontakten der Zellkontaktierungseinheit abgreifbar ist, welche größer ist als die Spannung einer einzelnen Speicherzelle, allerdings nominal unter einer Berührschutzgrenze liegt. Vorzugsweise ist die Zellkontaktierungseinheit mit einem elektrisch isolierenden Deckmantel als Berührschutz abgedeckt. Sind in einer Batterie mehrere Energiespeichermodule seriell miteinander verschaltet, dann kann an den Anschlusskontakten durchaus eine auf ein gemeinsames Potential, beispielsweise Masse, bezogene Spannung auftreten, die oberhalb der Berührschutzgrenze liegt und ein Vielfaches der Gesamtspannung eines einzelnen Energiespeichermoduls beträgt. Die Isolationsmäntel sind bzgl. ihrer Isolationseigenschaften so ausgeführt, dass sie auch hinsichtlich solch einer Spannung einen Berührschutz bereitstellen.

In einer weiteren Ausgestaltung weisen die Speicherzellen jeweils zwei Anschlussterminals auf, die gemeinsam auf einer Vorderseite einer jeweiligen Speicherzelle angeordnet sind, wobei die Vorderseiten aller Speicherzellen, wenn diese in dem Energiespeichermodul verspannt sind, in einer Ebene angeordnet sind. Hierdurch ergibt sich eine einfache Elektrifizierung sämtlicher Speicherzellen des Energiespeichermoduls mittels der Zellkontaktierungseinheit in einem einzigen Verarbeitungsschritt.

Vorzugsweise ist eine jeweilige Rückseite der Speicherzellen, die parallel zu der Vorderseite angeordnet ist und keine Anschlussterminals aufweist, mit einer Kühleinrichtung gekoppelt. Die Ausgestaltung der Speicherzellen erlaubt eine funktionale Trennung von Kühlung und Spannungsversorgung, wodurch sich ein einfacher und kostengünstiger Aufbau des Energiespeichermoduls ergibt. Darüber hinaus wird durch eine derartige funktionale Trennung auch die Herstellung des Energiespeichermoduls vereinfacht.

Ein erfindungsgemäßes Energiespeichermodul kann zwei oder mehr Speicherzellen-Reihen aufweisen, welche in dem Energiespeichermodul insbesondere nebeneinander, d.h. quer zur Erstreckung der Speicherzellen-Reihen, angeordnet sind. Um dann eine gleichmäßige Ausdehnung über die gesamte Breite des Energiespeichermoduls sicherzustellen, weisen in Kraftrichtung der Verspannung parallel zueinander angeordnete Zuganker eine unterschiedliche Dicke auf.

Die Zuganker und die Endplatten sind vorzugsweise zur Bereitstellung der Kraft der Verspannung miteinander verschweißt. Schweißverfahren sind bewährte Verbindungsverfahren im Bereich der Automobiltechnik. Insbesondere kann durch eine solche Verbindung eine dauerhafte Verspannung sichergestellt werden, die schnell herstellbar und reproduzierbar ist. Darüber hinaus stellt eine Schweißverbindung eine dauerhafte Verbindung dar, die die Verspannung über die Lebensdauer des Energiespeichermoduls aufrecht erhalten kann.

In einer weiteren konkreten Ausgestaltung des Energiespeichermoduls weisen die Zuganker eine der Höhe der Endplatten angepasste Höhe auf. Hierdurch ist ein sicherer mechanischer Kontakt von Isolationsmantel und Speicherzellen sichergestellt. Gleichzeitig bildet der Zuganker einen Teil eines "Gehäuses" der Speicherzellen bzw. Speicherzellen-Reihen aus, wodurch die Montage vereinfacht ist. Der Berührschutz ist durch den Isolationsmantel bereitgestellt.

Die Erfindung schafft weiterhin ein Verfahren zur Herstellung eines Energiespeichermoduls für eine aus einer Anzahl von Energiespeichermodulen (1) aufgebaute Vorrichtung zur Spannungsversorgung, insbesondere eines Kraftfahrzeugs, wobei das Energiespeichermodul (1) aus mehreren prismatischen Speicherzellen aufgebaut ist, die, zumindest in einer Reihe gestapelt, hintereinander angeordnet und zwischen zwei Endplatten über Zuganker verspannt sind. Das Verfahren umfasst die Schritte:
a) mechanische Befestigung zumindest zweier, insbesondere plattenförmiger, Zuganker an einer ersten Endplatte, so dass jede Speicherzelle in Reihe zwischen zwei parallel in Kraftrichtung der Verspannung verlaufenden Zugankern angeordnet werden kann;
b) Bereitstellen eines aus zwei Mantelhälften gebildeten Isolationsmantels pro Speicherzellen-Reihe mit elektrischen Isolationseigenschaften, wobei die elektrischen Isolationseigenschaften des Isolationsmantels derart sind, dass dieser einen Berührschutz bezüglich einer durch die serielle Verschaltung aller Speicherzellen des Energiespeichermoduls erhaltenen Spannung und/oder bezüglich einer durch die serielle Verschaltung der Energiespeichermodule (1) erhaltenen Spannung bereitstellt;
c) Positionieren eines jeweiligen Isolationsmantels derart zwischen zwei Zugankern, dass dieser an die Endplatte angrenzt und die beiden Mantelhälften an ihren jeweiligen, einander zugewandten Enden überlappen;
d) sequentielles Positionieren einer vordefinierten Anzahl an Speicherzellen innerhalb eines jeweiligen Isolationsmantels, so dass die Speicherzellen mit ihren jeweiligen Hauptflächen aneinander grenzen und mit ihren gegenüberliegenden Stirnseiten an den Isolationsmantel grenzen;
e) mechanische Befestigung der Zuganker an einer zweiten Endplatte, um die Speicherzellen (10) einer jeweiligen Speicherzellen-Reihe (60, 61) zwischen den Endplatten zu verspannen;
f) Herstellen elektrischer Verbindungen, so dass eine Gesamtspannung des Energiespeichermoduls zwischen zwei Anschlusskontakten des Energiespeichermoduls abgreifbar ist, welche größer ist als die Spannung einer einzelnen Speicherzelle (10), allerdings nominal unter einer Berührschutzgrenze liegt.

Sind in einer Batterie mehrere Energiespeichermodule seriell miteinander verschaltet, dann kann an den Anschlusskontakten durchaus eine auf ein gemeinsames Potential, beispielsweise Masse, bezogene Spannung auftreten, die oberhalb der Berührschutzgrenze liegt und ein Vielfaches der Gesamtspannung eine einzelnen Energiespeichermoduls beträgt. Die Isolationsmäntel sind bzgl. ihrer Isolationseigenschaften so ausgeführt, dass sie auch hinsichtlich solch einer Spannung einen Berührschutz bereitstellen.

Die in dem erfindungsgemäßen Verfahren durchzuführenden Verfahrensschritte können ohne besondere Schutzmaßnahmen hinsichtlich anliegender elektrischer Spannungen durchgeführt werden, da die maximal auftretende Spannung unterhalb einer Berührschutzgrenze liegt.

Um sicherzustellen, dass der Isolationsmantel nicht gegenüber den Endplatten verrutschen kann und diese hierdurch spannungsführend werden können, ist weiterhin vorgesehen, dass zumindest auf den den Endplatten zugewandten Seiten des Isolationsmantels ein Kleber aufgebracht wird, um diesen mit der ersten und zweiten Endplatte zu verkleben.

In einer weiteren Fortbildung des erfindungsgemäßen Verfahrens weisen die Speicherzellen jeweils zwei Anschlussterminals auf, die gemeinsam auf einer Vorderseite einer jeweiligen Speicherzelle angeordnet sind, wobei in Schritt d) eine Positionierung der Anzahl an Speicherzellen derart erfolgt, dass die Vorderseiten der Speicherzellen in einer Ebene zum Liegen kommen. Hierdurch kann die elektrische Kontaktierung der Anschlussterminals vereinfacht werden.

Vorzugsweise wird auf eine jeweilige Rückseite der Speicherzellen, die parallel zu der Vorderseite angeordnet sind und keine Anschlussterminals aufweisen, ein Wärmeleitblech zur Anbindung an eine Kühleinrichtung aufgebracht, wobei das Wärmeleitblech über Wärmeleitkleber mit den Rückseiten der Speicherzellen verbunden wird. Dadurch, dass die Vorderseiten der Speicherzellen derart ausgerichtet werden, dass diese in einer Ebene zum Liegen kommen, können die Rückseiten aufgrund von Herstellungstoleranzen in unterschiedlichen Ebenen liegen. Um dennoch einen guten Anschluss zu der Kühleinrichtung sicherzustellen, wird über den Wärmeleitkleber ein Toleranzausgleich geschaffen.

In einer weiteren zweckmäßigen Ausgestaltung umfasst Schritt f) das stoffschlüssige Verbinden einer Zellkontaktierungseinheit mit den Anschlussterminals aller Speicherzellen des Energiespeichermoduls, wobei die Zellkontaktierungseinheit einen Träger umfasst, an dem mehrere Zellverbinder angeordnet sind, über die ein jeweiliges Anschlussterminal erster Polarität einer Speicherzelle mit einem jeweiligen Anschlussterminal zweiter Polarität mit einer benachbarten Speicherzelle elektrisch verbunden ist, so dass eine Gesamtspannung des Energiespeichermoduls zwischen zwei Anschlusskontakten der Zellkontaktierungseinheit abgreifbar ist, welche größer ist als die Spannung einer einzelnen Speicherzelle (10), allerdings nominal unter einer Berührschutzgrenze liegt. Die Herstellung sämtlicher elektrischer Verbindungen über eine Zellkontaktierungseinheit lässt sich besonders einfach und effizient durchrühren, da die Zellkontaktierungseinheit lediglich einmalig zu den Anschlussterminals sämtlicher Speicherzellen ausgerichtet werden braucht, woraufhin die stoffschlüssige Verbindung eines jeweiligen Anschlussterminals mit einem Zellverbinder erfolgen kann.

Nach dem stoffschlüssigen Verbinden der Zellkontaktierungseinheit mit den Anschlussterminals aller Speicherzellen wird die Zellkontaktierungseinheit mit einem elektrisch isolierenden Deckel als Berührschutz abgedeckt. Ein Berührkontakt mit Spannung führenden Teilen ist damit im Rahmen der Herstellung des erfindungsgemäßen Energiespeichermoduls lediglich noch an den Anschlusskontakten der Zellkontaktierungseinheit möglich, wobei die dabei anliegende Spannung nominal unter einer Berührschutzgrenze liegt, so dass keine weiteren Schutzmaßnahmen für die die Montage vornehmenden Arbeiter notwendig sind.

In einer weiteren vorteilhaften Ausgestaltung wird zumindest ein Energiespeichermodul in ein Speichergehäuse eingebracht und mit diesem mechanisch verbunden und zu einer Vorrichtung zur Spannungsversorgung, insbesondere eines Kraftfahrzeugs, verschaltet. Da bei den hierbei durchzuführenden Arbeiten Spannungen oberhalb einer Berührschutzgrenze auftreten können, ist lediglich dieser letzte Verfahrensschritt von einem speziell ausgebildeten Fachmann durchzuführen.

Die Erfindung wird nachfolgend näher anhand der Zeichnungen erläutert. Es zeigen:
- Fig. 1: einen ersten Schritt zur Herstellung eines erfindungsgemäßen Energiespeichermoduls,
- Fig. 2: einen zweiten Schritt zur Herstellung eines erfindungsgemäßen Energiespeichermoduls,
- Fig. 3: einen dritten Schritt zur Herstellung eines erfindungsgemäßen Energiespeichermoduls,

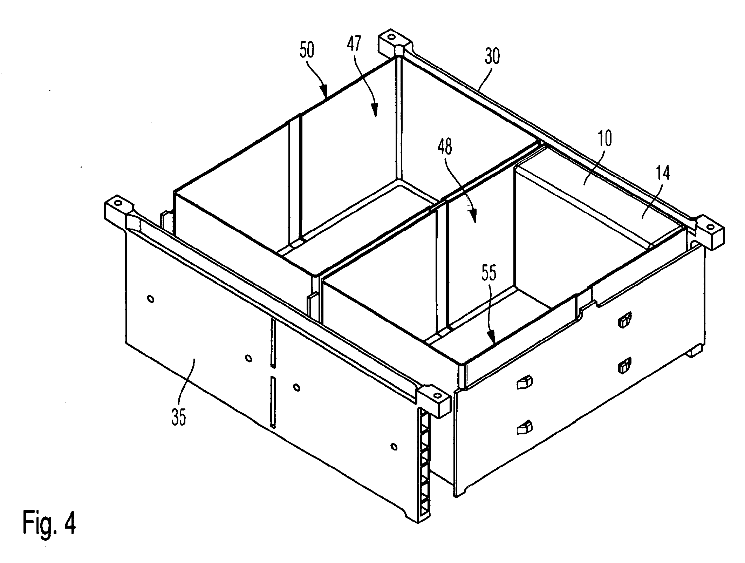

- Fig. 4: einen vierten Schritt zur Herstellung eines erfindungsgemäßen Energiespeichermoduls,
- Fig. 5: einen fünften Schritt zur Herstellung eines erfindungsgemäßen Energiespeichermoduls,
- Fig. 6: einen sechsten Schritt zur Herstellung eines erfindungsgemäßen Energiespeichermoduls,
- Fig. 7: einen siebten Schritt zur Herstellung eines erfindungsgemäßen Energiespeichermoduls,
- Fig. 8: einen achten Schritt zur Herstellung eines erfindungsgemäßen Energiespeichermoduls,
- Fig. 9: ein erfindungsgemäß hergestelltes Energiespeichermodul, dessen Speicherzellen noch nicht elektrisch miteinander verbunden sind,
- Fig. 10: einen neunten Schritt zur Elektrifizierung des erfindungsgemäßen Energiespeichermoduls,
- Fig. 11: ein elektrifiziertes, erfindungsgemäßes Energiespeichermodul,
- Fig. 12: den Schritt des Anbringens einer Steuereinheit an dem erfindungsgemäßen Energiespeichermodul,
- Fig. 13: ein in ein Gehäuse einer Vorrichtung zur Spannungsversorgung eingebautes Energiespeichermodul.

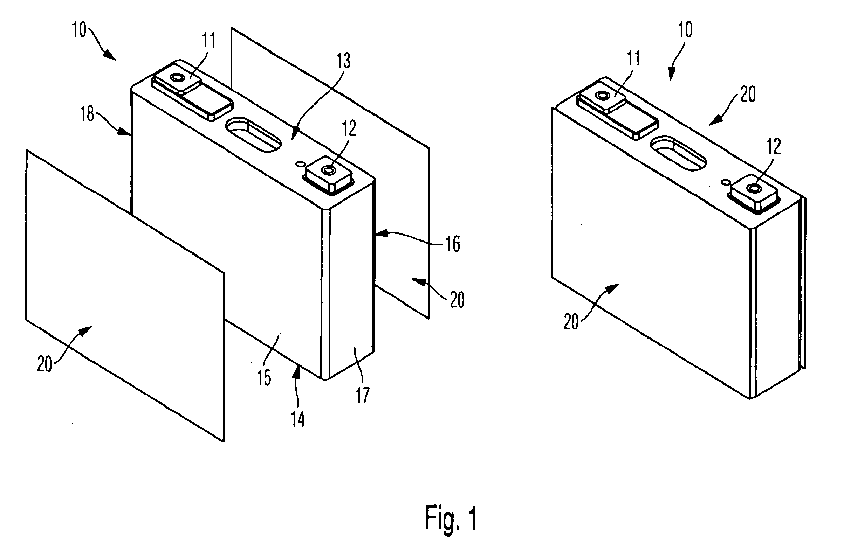

In Fig. 1 ist eine einzelne prismatische Speicherzelle 10 eines in seiner Gesamtheit später dargestellten Energiespeichermoduls 1 in perspektivischer Darstellung zu erkennen. Die Speicherzelle 10 besteht typischerweise aus einer oder mehreren einzelnen elektrochemischen Zellen, welche in der hier gewählten Darstellung im Inneren der Speicherzelle 10 im Verborgenen liegen. Auf ein er Vorderseite 13 weist die Speicherzelle 10 ein Anschlussterminal 11 erster Polarität und ein Anschlussterminal 12 zweiter Polarität auf. Auf der in der Figur nicht dargestellten Rückseite 14 der Speicherzelle 10 sind keine Anschlussterminals vorgesehen. Eines der Anschlussterminals 11, 12, typischerweise der Plus-Pol der Speicherzelle, kann elektrisch mit einem Gehäuse der Speicherzelle 10 verbunden sein.

Da in dem erfindungsgemäßen Energiespeichermodul 1 mehrere der Speicherzellen 10 zumindest in einer Reihe gestapelt hintereinander angeordnet werden, werden zumindest gegenüberliegende Hauptflächen 15, 16 mit einem elektrisch isolierenden Material versehen. In dem in Fig. 1 dargestellten Ausführungsbeispiel wird eine Klebefolie 20 auf die Hauptflächen 15, 16 aufgebracht. Alternativ könnte auf die Hauptflächen 15, 16 auch ein elektrisch isolierender Kleber aufgebracht werden. Ebenso wäre die Verwendung eines Schrumpfschlauchs, der auf die mit Kleber versehene Hauptflächen 15, 16 aufgebracht wird, denkbar.

Die Klebefolie 20 oder die genannten Alternativen müssen lediglich eine Niedervolt-Isolation bereitstellen, um eine Isolation zur benachbarten Speicherzelle einer Speicherzellen-Reihe herzustellen. Es ist ausreichend, wenn eine Isolationsfähigkeit von 10 bis 15 V gegeben ist, da während der Herstellung des erfindungsgemäßen Energiespeichermoduls keine Hochvolt-Sicherheit beim Handling der einzelnen Speicherzellen notwendig ist. Eine Hochvolt-Sicherheit ist oberhalb einer sog. Berührschutzgrenze erforderlich, die für Gleichspannungen nach ISO 6469-3 bzw. DIN EN 1987-3 bei 60 V liegt. Unterhalb dieser Berührschutzgrenze ist keine Isolation notwendig, da ein direktes Berühren für einen Menschen unschädlich ist. Oberhalb dieser Berührschutzgrenze ist eine Isolation erforderlich, um Personen gegen alle Gefahren, die sich aus dem Berühren spannungsführender Teile ergeben, zu schützen.

In der Figur sind weiterhin gegenüberliegende Stirnseiten der Speicherzelle 10 mit den Bezugszeichen 17 und 18 gekennzeichnet.

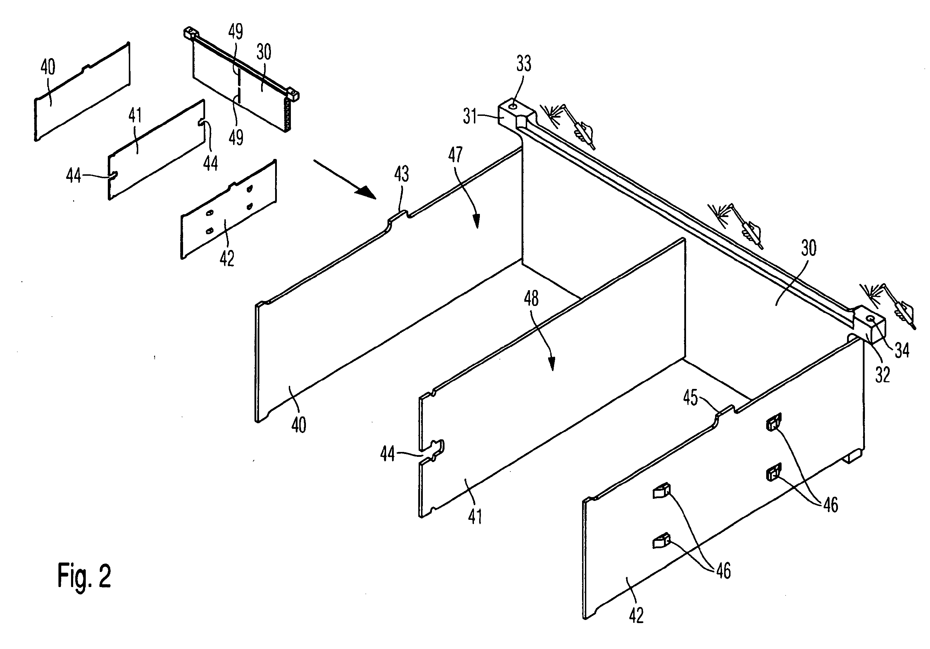

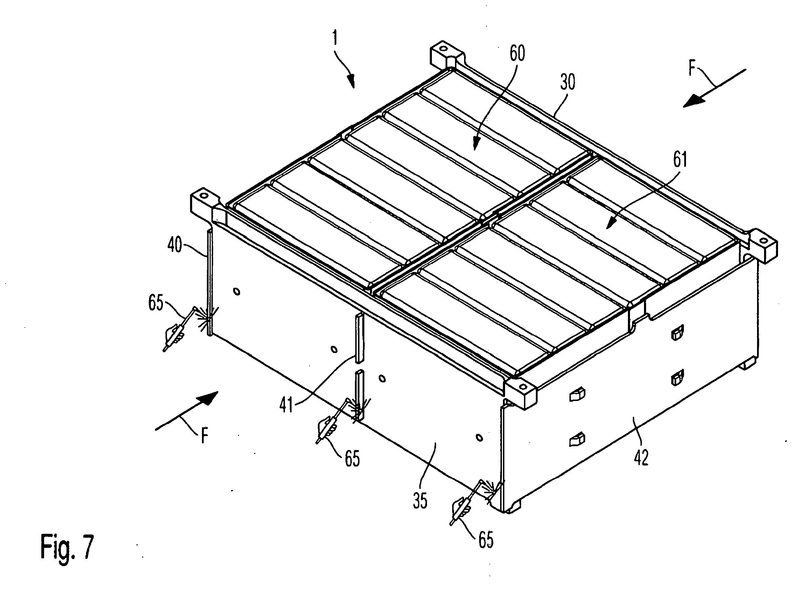

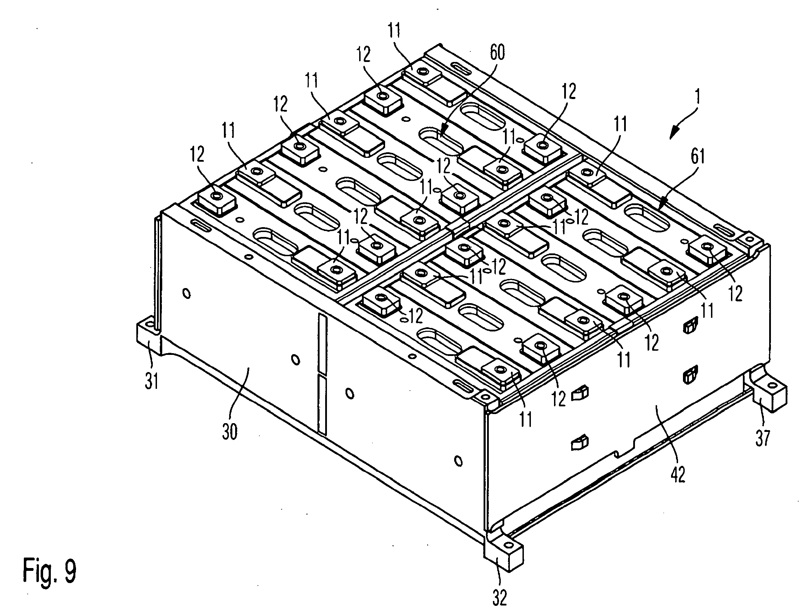

Bei dem erfindungsgemäßen Energiespeichermodul werden die Speicherzellen 10 in lediglich beispielhaft zwei Speicherzellen-Reihen 60, 61 angeordnet, wie dies beispielsweise den Figuren 7 oder 9 zu entnehmen ist. Die Verspannung der zu einer Reihe gestapelten Speicherzellen erfolgt im Ausführungsbeispiel unter Verwendung von Endplatten und Zugankern. In der perspektivischen Darstellung der Fig. 2 ist ein Zwischenbauteil einer Spannvorrichtung dargestellt, bei dem eine Endplatte 30, die auch als Druckplatte bezeichnet wird, mit drei flächig ausgebildeten Zugankern 40, 41, 42 verschweißt wird bzw. ist. Die Zuganker 40, 41, 42 verlaufen parallel und sind derart zueinander beabstandet, dass jeweils ein Aufnahmeberei ch 47, 48 für die jeweilige Speicherzellen-Reihe 60, 61 geschaffen ist. Jede der Speicherzellen-Reihen ist damit seitlich von zwei Zugankern 40, 41 bzw. 41, 42 umgeben.

Die Zuganker 40, 42 weisen jeweils eine Nase 43, 45 auf, die in Längserstreckung der Zuganker in etwa mittig angeordnet ist. Darüber hinaus sind an dem Zuganker 42 vier Laschen 46 vorgesehen, an denen eine Steuerung 95 befestigt werden kann. Im Vergleich zu den Zugankern 40, 42 ist der Zuganker 41 dicker ausgebildet. Beispielsweise weisen die Zuganker 40, 42 eine Dicke von 2 mm und der Zuganker 43 eine Dicke von 3 mm auf. Hierdurch ist eine gleichmäßige Ausdehnung des Energiespeichermoduls parallel zur Kraftrichtung der Verspannung (d.h. in Erstreckungsrichtung der Zuganker 40, 41, 42) sichergestellt, wenn sich die Speicherzellen in den beiden Speicherzellen-Reihen aufgrund von Gasdruckänderungen, welche beim Betrieb der Speicherzellen auftreten, verformen.

Die Endplatte 30 weist an ihren gegenüberliegenden Enden jeweils einen Sockel 31, 32 auf. Jeder der Sockel 31, 32 ist mit einer Ausnehmung oder Bohrung 33, 34 versehen. Das fertig gestellte Energiespeichermodul wird über die Sockel 31, 32 sowie die an der weiteren Endplatte (in Fig. 2 nicht dargestellt) ebenfalls vorgesehenen Sockel in einem Gehäuse einer Vorrichtung zur Spannungsversorgung, insbesondere eines Kraftfahrzeugs, befestigt. Die Befestigung kann z.B. über Bolzen und/oder Schrauben erfolgen.

Die Verschweißung als Verbindung zwischen den Zugankern 40, 41, 42 und der Endplatte 30 stellt ein schnelles, sicheres und etabliertes Verbindungsverfahren im Bereich der Automobiltechnik dar. Prinzipiell könnte die Herstellung der mechanischen Verbindung der in Fig. 2 gezeigten Komponenten auch auf alternative Weise erfolgen, beispielsweise durch Verschraubung oder jede beliebige andere form- und/oder kraftschlüssige Verbindung. Während die Zuganker 40, 42 zur Verschweißung mit der Endplatte 30 mit deren Stirnseiten bündig in Anlage gebracht und verschweißt werden, wird der Zuganker 41, der im Bereich seiner beiden gegenüberliegenden Enden jeweils eine Nut 44 zur Bereitstellung jeweiliger Durchstecklaschen aufweist, in korrespondierende Aussparungen 49 der Endplatte 30 gesteckt und dann von der anderen Seite her verschweißt.

In einem nächsten Verfahrensschritt werden Isolationsmäntel 50, 55 in den Aufnahmebereichen 47, 48 der vorbereiteten Spannvorrichtung positioniert. Die Aufgabe der Isolationsmäntel 50, 55 besteht darin, eine Hochvolt-Isolation bereitzustellen. Die elektrischen Isolationseigenschaften eines jeweiligen Isolationsmantels 50, 55 sind derart, dass diese einen Berührschutz bezüglich einer durch die serielle Verschaltung aller Speicherzellen des Energiespeichermoduls erhaltenen Spannung bereitstellt. Diese an Anschlusskontakten abgreifbare Gesamtspannung des Energiespeichermoduls ist zwar größer als die Spannung einer einzelnen Speicherzelle, allerdings nominal unter der Berührschutzgrenze. Diese Spannung kann aber auch oberhalb der Berührschutzgrenze liegen, nämlich dann, wenn die in einer Batterie enthaltenen Energiespeichermodule seriell miteinander verschaltet sind. In diesem Fall wird durch die Isolationsmäntel 50, 55 ein Schutz für den die Montage vornehmenden Monteur bereitgestellt. Bei mehreren seriell verschalteten Energiespeichermodulen kann die an einem Energiespeichermodul anliegende, auf ein gemeinsames Potential, beispielsweise Masse, bezogene Spannung durchaus ein Vielfaches der Gesamtspannung eines einzelnen Energiespeichermoduls betragen, im ungünstigsten Fall entspricht diese Spannung der mit der Anzahl der verschalteten Energiespeichermodule multiplizierten Gesamtspannung eines einzelnen Energiespeichermoduls. Ohne Isolationsmäntel würde diese Spannung beispielsweise an dem aus den Endplatten 30, 35 und dem Zuganker 40, 41, 42 gebildete Druckrahmen anliegen. Das Vorsehen der Isolationsmäntel 50, 55 sorgt somit dafür, dass der Druckrahmen elektrisch isoliert ist.

Vorzugsweise weisen die Isolationsmäntel 50, 55 auch thermisch isolierende Eigenschaften auf. Hierdurch kann einerseits verhindert werden, dass bei einem fertig gestellten Energiespeichermodul Kühlleistung auf die Endplatten abfließt. Die Kühlleistung kommt somit sämtlich den Speicherzellen des Energiespeichermoduls zugute. Darüber hinaus werden die Speicherzellen während der Herstellung der Verspannung durch Verschweißung der Endplatte 35 mit den Zugankern 40, 41, 42 vor zu hoher Wärme und damit einer Beschädigung geschützt.

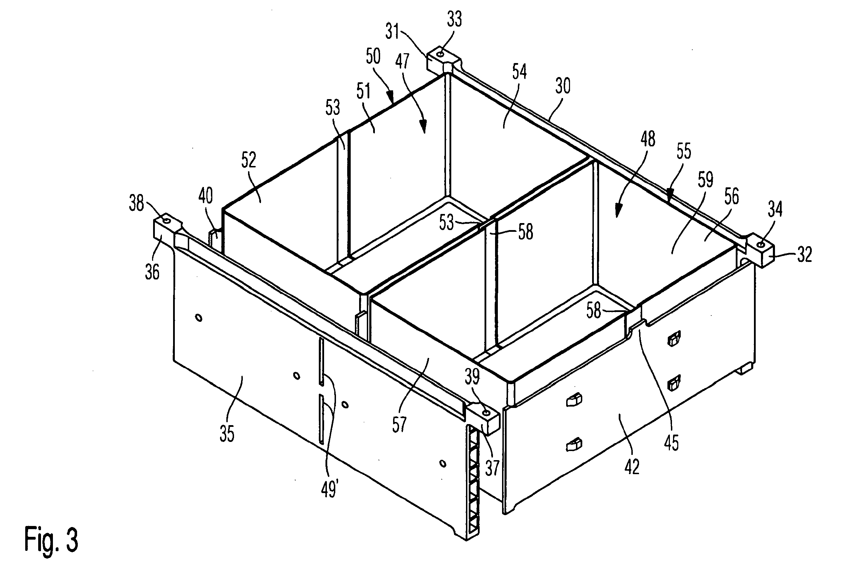

Jeder der Isolationsmäntel 50, 55 ist aus zwei Mantelhällten 51, 52 bzw. 56, 57 gebildet. Die Mantelhälften 51, 52, 56, 57 sind vorzugsweise als Gleichteile ausgebildet. Dabei sind die parallel verlaufenden Schenkel der zugeordneten Mantelhälften 51, 52 bzw. 56, 57 derart zueinander angeordnet, dass diese an ihren jeweiligen, einander zugewandten Enden überlappen. Die überlappung ist in Fig. 3 mit den Bezugszeichen 53 bzw. 58 gekennzeichnet. Die Überlappung dient einerseits zur Einhaltung von Luft- und Kriechstrecken. Andererseits erleichtern diese die Verspannung des Energiespeichermoduls, nachdem sämtliche Speicherzellen 1 0 einer Speicherzellen-Reihe in den jeweiligen Aufnahmebereich eingebracht wurden. Die Überlappung 53 bzw. 58 wird durch den Versatz eines Abschnitts eines der Schenkel der Mantelhälften 51, 52 bzw. 56, 57 ermöglicht. Hierdurch ist ein einfaches Verschieben der zugeordneten Mantelhälften 51, 52 bzw. 56, 57 zueinander möglich, wenn die Verspannung mittels der zweiten Endplatte 35 durchgeführt wird.

Die Länge der Überlappung 53, 58 ist in Abhängigkeit der Anzahl und/oder der Dicke der Speicherzellen einer Speicherzellen-Reihe gewählt. Die Dicke einer Speicherzelle ist dabei die Länge der Erstreckung einer Speicherzelle in Kraftrichtung der Verspannung, d.h. in Erstreckungsrichtung der Zuganker. Da die chemisch bereits aktiven Speicherzellen aufgrund des im Inneren entstehenden Drucks ohne eine Vorspannung ausbeulen, können die Speicherzellen eine Ausbauchung aufweisen. Typischerweise beträgt diese maximal 5 % ihrer Dicke. Die Überlappung der noch zueinander beweglichen Mantelhälften 56, 57 bemisst sich damit nach der Anzahl der in einer Speicherzellen-Reihe angeordneten Speicherzellen zuzüglich der maximal möglichen Ausbauchung aller Speicherzellen, damit eine Relativbewegung der Mantelhälften 56, 57 bei der Verspannung möglich ist.

Vor dem Einbringen der Isolationsmäntel 50, 55 in die jeweiligen Aufnahmebereiche 47, 48 werden diese beidseitig, d.h. zu der bzw. den Endplatten 30, 35 hin sowie auf deren Innenseiten zu den Hauptflächen der beiden äußersten Speicherzellen hin, mit einem Klebstoff versehen. Die Verklebung minimiert eine Bewegung der Komponenten zueinander während der Montage. Darüber hinaus sorgt die Verklebung bei einem fertig gestellten Energiespeichermodul 1 dafür, dass eine Bewegung der Komponenten im eingebauten Zustand in einem Kraftfahrzeug nicht mehr stattfinden kann. Insbesondere wird hierdurch eine Bewegung in z-Richtung, d.h. in Richtung der Hochachse, eines Kraftfahrzeugs minimiert.

Aus der perspektivischen Darstellung der Fig. 3 ist weiterhin ersichtlich, dass die Nase 45 - und auch die in der Figur nicht ersichtliche Nase 43 - im Bereich der Überlappung 58 bzw. 53 zum Liegen kommt und eine verbesserte mechanische Stabilität während der Montage und im Betrieb gewährleistet.

Nach dem Einbringen der Isolationsmäntel 50, 55 in das Zwischenbauteil der Fig. 2 wird die Endplatte 35 lose auf dem miittleren Zuganker 41 vorpositioniert, indem die durch die Nut 44 (nicht ersichtlich) gebildeten Durchstecklaschen durch die korrespondierenden Aussparungen 49' der Endplatte 35 gesteckt werden.

Im weiteren Herstellungsablauf wird nun eine erste Speicherzelle 10 in einem der Aufnahmebereiche 47, 48 positioniert. Die Positionierung erfolgt dabei zunächst derart, dass die Rückseite 14 dabei nach oben zeigt.

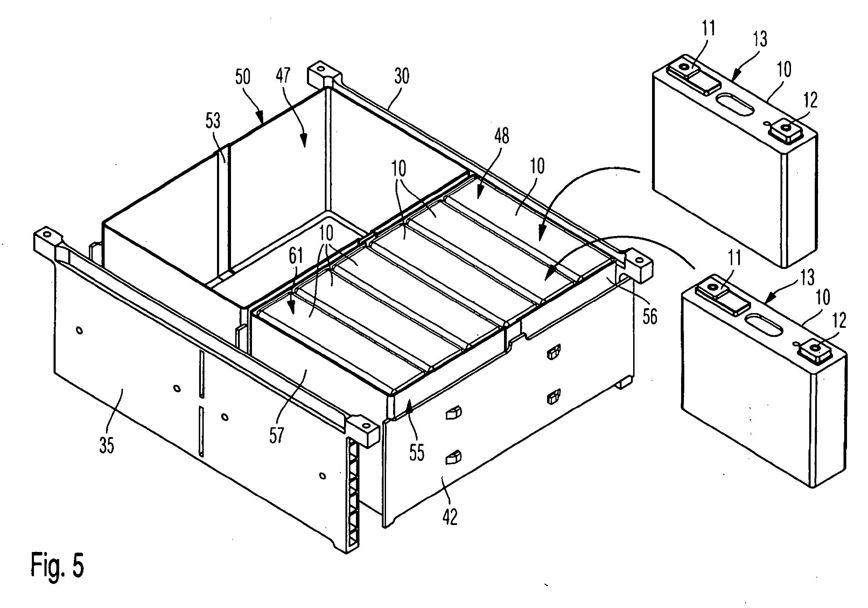

Wie aus Fig. 5 ersichtlich ist, werden die Speicherzellen 10 sequentiell zunächst in den Aufnahmebereich 48 und anschließend in den Aufnahmebereich 47, oder umgekehrt, eingebracht. Dabei sind jeweils die Rückseiten 14 dem Betrachter bzw. Monteur zugewandt. Im vorliegenden Ausführungsbeispiel weist eine Speicherzellen-Reihe 61 sechs hintereinander angeordnete Speicherzellen 10 auf. In entsprechender Weise weist die in den Aufnahmebereich 47 eingebrachte Speicherzellen-Reihe 60 ebenfalls sechs Speicherzellen 10 auf, was in Fig. 5 jedoch noch nicht erkennbar ist. Prinzipiell könnte ein Energiespeichermodul eine andere Anzahl an hintereinander angeordneten Speicherzellen 10 aufweisen. Ebenso könnte die Anzahl der nebeneinander angeordneten Speicherzellen-Reihen variiert werden.

Zur Bauraumoptimierung des Energiespeichermoduls 1 ist es vorteilhaft, wenn in einer Speicherzellen-Reihe alternierend isolierte und nicht isolierte Speicherzellen 10 hintereinander angeordnet werden. Dies bedeutet, eine Speicherzelle weist die in Fig. 1 dargestellte Klebefolie 20 auf, die danach angeordnete Speicherzelle 10 jedoch nicht, usw. Bei dem in der Figur dargestellten Ausführungsbeispiel mit insgesamt zwölf Speicherzellen, die zu jeweils sechs Zellen in zwei Reihen angeordnet sind, sind damit insgesamt sechs Speicherzellen beidseitig mit der in Fig. 1 gezeigten Klebefolie 20 isoliert.

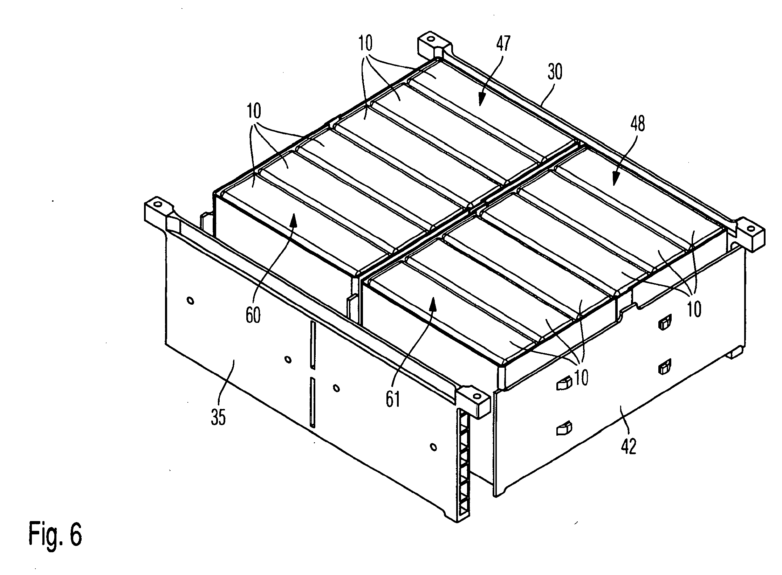

Fig. 6 zeigt das Energiespeichermodul, bei dem in dem Aufnahmebereich 47 die Speicherzellen-Reihe 60 in der beschriebenen Weise angeordnet ist. Die Positionierung und Ausrichtung der insgesamt zwöhf Speicherzellen ist dabei derart, dass die Vorderseiten mit den Anschlussterminals (in Fig. 6 nicht ersichtlich) in einer Ebene angeordnet sind. Anschließend erfolgt, wie dies in Fig. 7 dargestellt ist, eine Beaufschlagung der Endplatten 30, 35 mit einer vorgegebenen Kraft F, durch die die Ausbauchungen der Speicherzellen 10 eliminiert werden. Anschließend erfolgt eine Verschweißung (Bezugszeichen 65) der Zuganker 40, 41, 42 mit der Endplatte 35. Durch die Verspannung wird eine erneute Ausdehnung der Speicherzellen 10 verhindern, wodurch die Performance und Lebensdauer der einzelnen Speicherzellen verbessert ist.

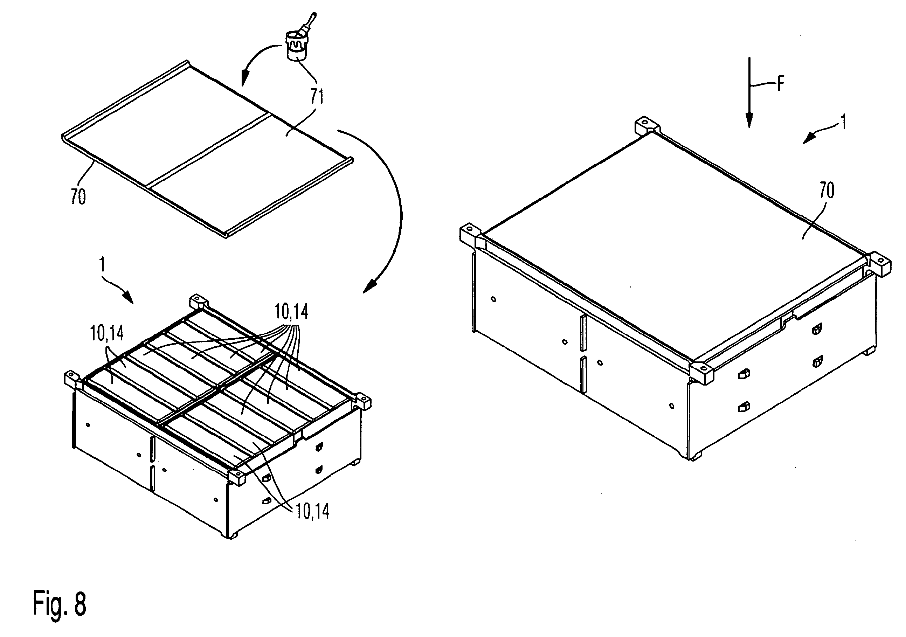

Eine Kühl-Anbindung der Speicherzellen 10 erfolgt über deren Rückseite 14. Aufgrund von Fertigungstoleranzen der einzelnen Speicherzellen 10 ist es möglich, dass die Rückseiten 14, der Speicherzellen 10 nicht in einer Ebene liegen. Zu diesem Zweck wird ein Wärmeleitkleber 71 auf ein Wärmeleitblech 70 aufgebracht (vgl. Fig. 8). Das Wärmeleitblech 70 wird über den Wärmeleitkleber 71 mit den Rückseiten 14 der Speicherzellen 10 verklebt. Durch den Wärmeleitkleber wird dabei ein Ausgleich unterschiedlicher Höhen der Rückseiten 14 realisiert. Um sicherzustellen, dass sämtliche Speicherzellen 10 über den Wärmeleitkleber mit dem Wärmeleitblech und der Kühleinrichtung verbunden sind, kann in Abhängigkeit einer festgestellten Höhentoleranz eine bedarfsgerechte Mengensteuerung des Wärmeleitklebers erfolgen. In der Praxis ist es ausreichend, wenn eine Distanz zwischen 0,2 und 0,6 mm zwischen dem Wärmeleitblech 70 und den Rückseiten 14 der Speicherzellen 10 durch den Wärmeleitkleber 71 ausgeglichen werden kann. Wie in Fig. 8 schematisch clargestellt, wird das mit dem Wärmeleitkleber 71 versehene Wärmeleitblech 70 mit eineir vordefinierten Kraft F auf die Rückseiten 14 der Speicherzellen 10 aufgepresst.

In Fig. 9 ist in einer perspektivischen Darstellung das mit dem Wärmeleitblech 70 versehene Energiespeichermodul 1 von seiner Vorderseite her dargestellt. Dabei sind wiederum die zwei Speicherzellein-Reihen 60, 61 mit den jeweils sechs Speicherzellen 10 ersichtlich. Weiterhin erkennbar ist, dass in einer Speicherzellen-Reihe 60, 61 aneinander grenzende Speicherzellen 10 derart zueinander positioniert sind, dass ein Anschlussterminal 11 erster Polarität einer Speicherzelle 10 benachbart ist zu einem Anschlussterminal 12 zweiter Polarität der benachbarten Speicherzelle 10. Wie bereits erwähnt, befinden sich sämtliche Anschlussterminals 11, 12 aller Speicherzellen 10 des Energiespeichermoduls 1 dabei in einer gemeinsamen Ebene.

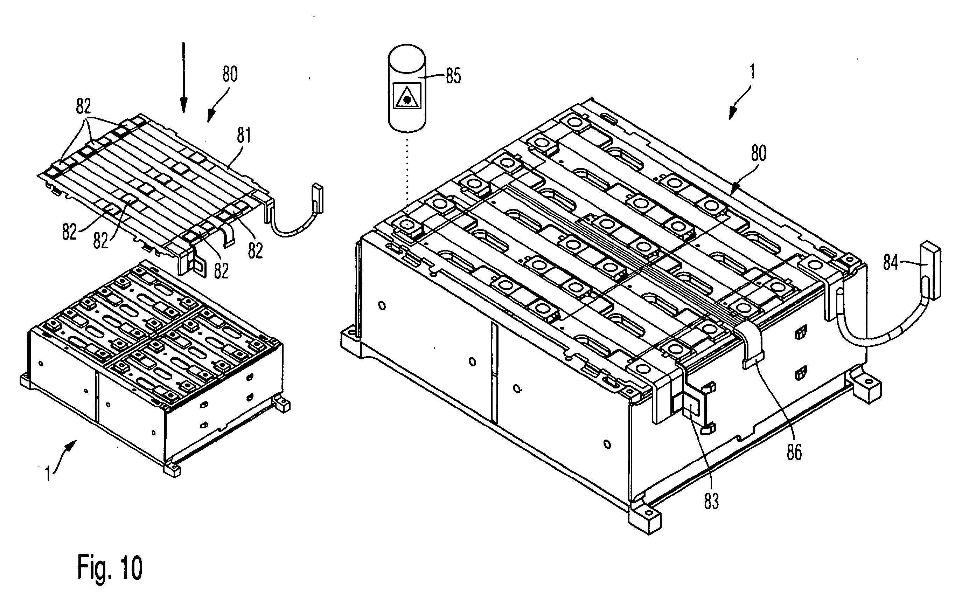

Fig. 10 zeigt einen nächsten Verarbeitungsschritt, gemäß dem eine Zellkontaktierungseinheit 80 mit den Anschlussterminals 11, 12 aller Speicherzellen 10 des Energiespeichermoduls 1 verbunden wird. Die Zellkontaktierungseinheit 80 umfasst einen Träger 81, an dem eine Anzahl an Zellverbinden 82 befestigt ist. Darüber hinaus umfasst die Zellkontaktierungseinheit 80 zwei Anschlusskontakte 83, 84, zwischen denen eine Gesamtspannung des Energiespeichermoduls 1 abgegriffen werden kann. Diese Gesamtspannung ist größer als die Spannung ein er einzelnen Speicherzelle, allerdings nominal unter der Berührschutzgrenze. Sind später dann innerhalb einer Batterie mehrere Energiespeichermodule seriell miteinander verschaltet, dann kann an den Anschlusskontakten 83, 84 durchaus eine Spannung anliegen, die dem Vielfachen der Gesamtspannung eines einzelnen Energiespeichermoduls entspricht. Die Anschlusskontakte 83, 84 und 86 sind als Steckkontakte ausgeführt. Ein Anschlusskontakt 86 dient zur Verbindung mit einer in einem weiteren Verarbeitungsschritt angebrachten Steuerung 95. Die Zellkontaktierungseinheit 80 wird zunächst über dem Energiespeichermodul 1 positioniert. Anschließend werden die Zellverbinder 82 mit den jeweiligen Anschlussterminals 11, 12 unter Verwendung eines Laserschweißgeräts 85 stoffschlüssig verbunden.

Sämtliche bislang beschriebene Herstellungsschritte können ohne besondere Schutzmaßnahmen hinsichtlich elektrischer Spannung durchgeführt werden, da alle Spannungen, mit denen ein Monteur zufällig beaufschlagt werden könnte, unterhalb der Berührschutzgrenze liegen. Die Montage kann bis zu diesem Zeitpunkt daher kostengünstig durch nicht besonders hinsichtlich Elektrik geschulte Fachkräfte durchgeführt werden.

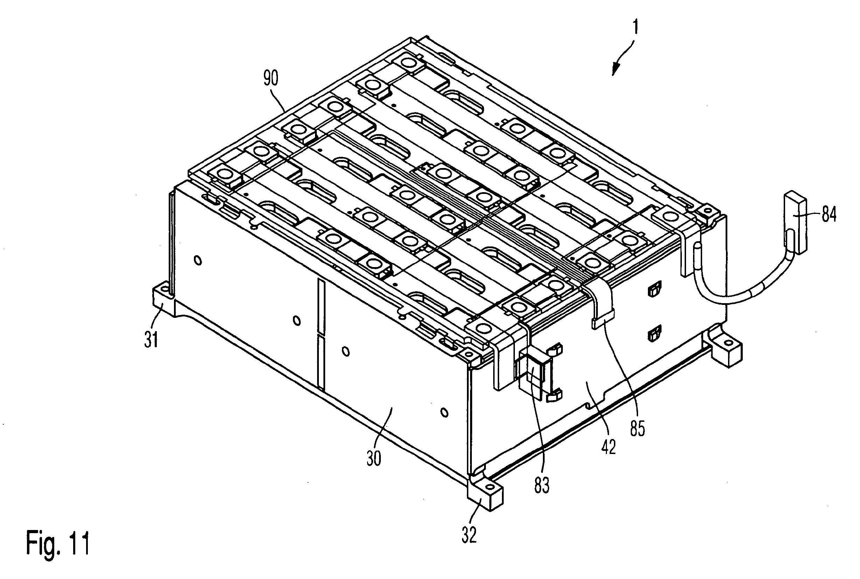

In einem weiteren, in Fig. 11 dargestellten Verfahrensschritt wird ein Deckel 90 als Berührschutz auf die Zellkontaktierungseinheit 80 aufgebracht. Eine elektrische Kontaktierung ist somit nur noch über die Anschlusskontakte 83, 84 möglich.

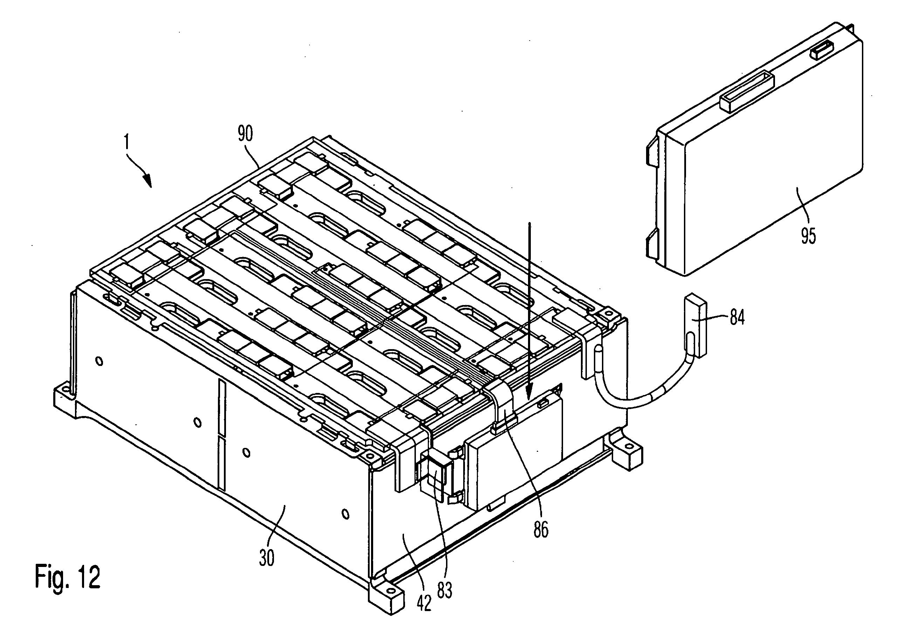

Gemäß Fig. 12 wird an den an dem Zuganker 42 ausgebildeten Laschen 46 die bereits erwähnte Steuerung 95 befestigt und mit dem Anschlusskontakt 86 elektrisch verbunden. Die Steuerung dient zur Temperaturüberwachung der Speicherzellen 10. Darüber hinaus ist die Steuerung zur überwachung der Speicherzellen 10 mit jeweiligen Speicherabgriffen (nicht erkennbar) verbunden.

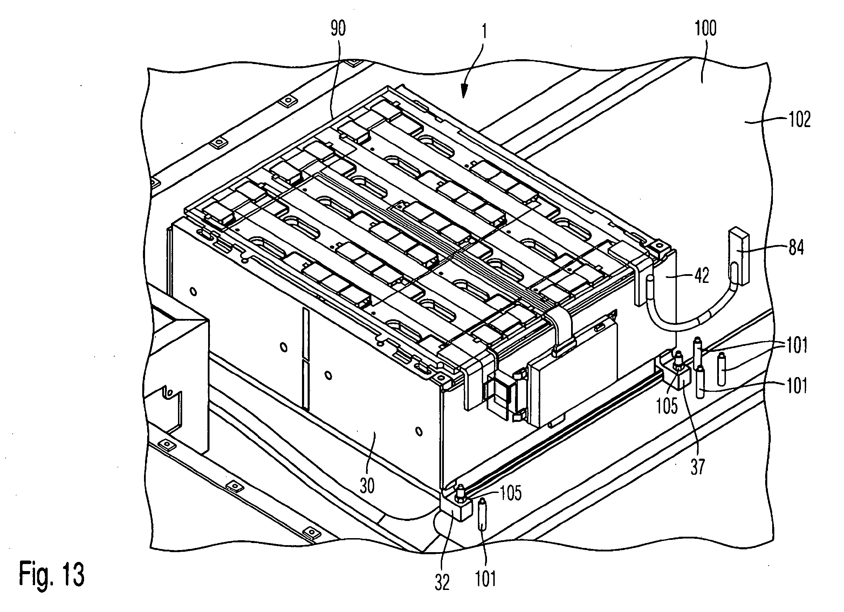

Fig. 13 zeigt schließlich das fertig gestellte Energiespeichermodul 1, das in einem Gehäuse 100 einer Vorrichtung zur Spannungsversorgung, d.h. einer Batterie z.B. eines Fahrzeugs, eingebracht ist. An einem Boden 102 des Gehäuses 100 ist dabei eine Vielzahl an Bolzen 101 vorgesehen. Zur Montage und mechanischen Fixierung des Energiespeichermoduls 1 werden die Bolzen 101 durch die Ausnehmungen 33, 34 der Sockel 31, 32 sowie die Ausnehmungen 38, 39 der Sockel 36, 37 hindurch gesteckt. Die Bolzen 101 sind z.B. an ihren Enden mit einem Gewinde versehen, so dass eine Verschraubung 105 der Sockel über, über die Bolzen geschraubte, Muttern vorgenommen werden kann.

In dem Gehäuse 100 kann eine Mehrzahl an erfindungsgemäß hergestellten Energiespeichermodulen 1 in der beschriebenen Weise angeordnet werden. Eine elektrische Verschaltung der Energiespeichermodule 1 erfolgt durch die jeweiligen Anschlusskontakte 83, 84. Vorzugsweise sind die Energiespeichermodule seriell miteinander verschaltet. Da bei den hiermit verbundenen Arbeiten Spannungen auftreten können, die oberhalb einer Berührschutzgrenze liegen, sind diese Schritte von einer besonders geschulten Elektrofachkraft durchzuführen.

Die Isolationsmäntel sind bzgl. ihrer Isolationseigenschaften so ausgeführt, dass sie zum einen einen Berührschutz bezüglich einer durch die serielle Verschaltung aller Speicherzellen eines Energiespeichermoduls erhaltenen Spannung bereitstellen. Zum anderen stellen sie einen Berührschutz bezüglich einer durch die serielle Verschaltung der in einer Batterie enthaltenen Energiespeichermodule bereit, und somit bezüglich einer durch die serielle Verschaltung aller in einer Batterie enthaltenen Speicherzellen.

## Patentansprüche

1. Energiespeichermodul (1) für eine aus einer Anzahl von Energiespeichermodulen (1) aufgebaute Vorrichtung (100) zur Spannungsversorgung, insbesondere eines Kraftfahrzeugs, wobei das Energiespeichermodul (1) aus mehreren prismatischen Speicherzellen (10) aufgebaut ist, die, zu mindestens einer Reihe (60, 61) gestapelt, hintereinander angeordnet und zwischen zwei Endplatten (30, 35) über Zuganker (40, 41, 42) verspannt sind, wobei eine jeweilige Speicherzellen-Reihe (60, 61) durch einen die Speicherzellen-Reihe (60, 61) vollständig umlaufenden Isolationsmantel (50, 55) mit elektrischen Isolationseigenschaften von den Endplatten (30, 35) und den Zugankern (40, 41, 42) getrennt ist, wobei die elektrischen Isolationseigenschaften des Isolationsmantels (50, 55) derart sind, dass dieser einen Berührschutz bezüglich einer durch die serielle Verschaltung aller Speicherzellen (10) des Energiespeichermoduls erhaltenen Spannung und/oder bezüglich einer durch die serielle Verschaltung der Energiespeichermodule (1) erhaltenen Spannung bereit stellt, **dadurch gekennzeichnet, dass** der Isolationsmantel (50, 55) aus zwei Mantelhälften (51, 52; 56, 57) gebildet ist, welche an ihren jeweiligen, einander zugewandten Enden überlappen.

2. Energiespeichermodul nach Anspruch 1, **dadurch gekennzeichnet, dass** der Isolationsmantel (50, 55) mit den Endplatten (30, 35) verklebt ist.

3. Energiespeichermodul nach Anspruch 1 oder 2, **dadurch gekennzeichnet, dass** der Isolationsmantel (50, 55) mit zumindest manchen der Speicherzellen (10) verklebt ist.

4. Energiespeichermodul nach einem der vorhergehenden Ansprüche, **dadurch gekennzeichnet, dass** zwischen in der Speicherzellen-Reihe (60, 61) aneinander grenzenden Speicherzellen (10) zur elektrischen Isolation der Speicherzellen (10) untereinander eine Klebeschicht oder eine Klebefolie oder ein um die Speicherzelle aufgebrachter Schrumpfschlauch vorgesehen ist.

5. Energiespeichermodul nach einem der vorhergehenden Ansprüche, **dadurch gekennzeichnet, dass** der Isolationsmantel (50, 55) thermisch isolierende Eigenschaften aufweist.

6. Energiespeichermodul nach Anspruch 1, **dadurch gekennzeichnet, dass** die Länge der Überlappung in Abhängigkeit der Anzahl und/oder der Dicke der Speicherzellen (10) einer Speicherzellen-Reihe (60, 61) gewählt ist.

7. Energiespeichermodul nach Anspruch 1 oder 6, **dadurch gekennzeichnet, dass** die Mantelhälften (51, 52; 56, 57) als Gleichteile ausgebildet sind.

8. Energiespeichermodul nach einem der vorhergehenden Ansprüche, **dadurch gekennzeichnet, dass** die Speicherzellen (10) des Energiespeichermoduls über eine Zellkontaktierungseinheit (80) elektrisch seriell und/oder parallel miteinander verbunden sind, wobei die Zellkontaktierungseinheit (80) einen Träger (81) umfasst, an dem mehrere Zellverbinder (82) angeordnet sind, über die ein jeweiliges Anschlussterminal erster Polarität einer Speicherzelle mit einem jeweiligen Anschlussterminal zweiter Polarität einer benachbarten Speicherzelle elektrisch verbunden ist, so dass eine Gesamtspannung des Energiespeichermoduls zwischen zwei Anschlusskontakten der Zellkontaktierungseinheit (80) abgreifbar ist, welche größer ist als die Spannung einer einzelnen Speicherzelle (10), allerdings nominal unter einer Berührschutzgrenze liegt.

9. Energiespeichermodul nach Anspruch 8, **dadurch gekennzeichnet, dass** die Zellkontaktierungseinheit (80) mit einem elektrisch isolierenden Deckel (90) als Berührschutz abgedeckt ist.

10. Energiespeichermodul nach einem der vorhergehenden Ansprüche, **dadurch gekennzeichnet, dass** die Speicherzellen (10) jeweils zwei Anschlussterminals aufweisen, die gemeinsam auf einer Vorderseite einer jeweiligen Speicherzelle angeordnet sind, wobei die Vorderseiten aller Speicherzellen (10), wenn diese in dem Energiespeichermodul verspannt sind, in einer Ebene angeordnet sind.

11. Energiespeichermodul nach Anspruch 10, **dadurch gekennzeichnet, dass** eine jeweilige Rückseite der Speicherzellen (10), die parallel zu der Vorderseite angeordnet sind und keine Anschlussterminals aufweisen, mit einer Kühleinrichtung gekoppelt sind.

12. Energiespeichermodul nach einem der vorhergehenden Ansprüche, **dadurch gekennzeichnet, dass** dieses eine Anzahl, insbesondere zwei, nebeneinander angeordnete Speicherzellen-Reihen aufweist, wobei in Kraftrichtung der Verspannung parallel zueinander angeordnete Zuganker (40, 41, 42) eine unterschiedliche Dicke aufweisen.

13. Energiespeichermodul nach einem der vorhergehenden Ansprüche, **dadurch gekennzeichnet, dass** die Zuganker (40, 41, 42) und die Endplatten (30, 35) zur Bereitstellung der Kraft der Verspannung miteinander verschweißt sind.

14. Energiespeichermodul nach einem der vorhergehenden Ansprüche, **dadurch gekennzeichnet, dass** die Zuganker (40, 41, 42) eine der Höhe der Endplatten (30, 35) angepasste Höhe aufweisen.

15. Verfahren zur Herstellung eines Energiespeichermoduls (1) für eine aus einer Anzahl von Energiespeichermodulen (1) aufgebaute Vorrichtung (100) zur Spannungsversorgung, insbesondere eines Kraftfahrzeugs, wobei das Energiespeichermodul (1) aus mehreren prismatischen Speicherzellen (10) aufgebaut ist, die, zu mindestens einer Reihe (60, 61) gestapelt, hintereinander angeordnet und zwischen zwei Endplatten (30, 35) über Zuganker (40, 41, 42) verspannt sind, mit den Schritten:
a) mechanische Befestigung zumindest zweier, insbesondere plattenförmiger, Zuganker (40, 41, 42) an einer ersten Endplatte (30, 35), so dass jede Speicherzellenreihe zwischen zwei parallel in Kraftrichtung der Verspannung verlaufenden Zugankern (40, 41, 42) angeordnet werden kann;
b) Bereitstellen eines aus zwei Mantelhälften (51, 52; 56, 57) gebildeten Isolationsmantels (50, 55) pro Speicherzellen-Reihe (60, 61) mit elektrischen Isolationseigenschaften, wobei die elektrischen Isolationseigenschaften des Isolationsmantels (50, 55) derart sind, dass dieser einen Berührschutz bezüglich einer durch die serielle Verschaltung aller Speicherzellen (10) des Energiespeichermoduls erhaltenen Spannung und/oder bezüglich einer durch die serielle Verschaltung der Energiespeichermodule (1) erhaltenen Spannung bereit stellt;
c) Positionieren eines jeweiligen Isolationsmantels (50, 55) derart zwischen zwei Zugankern (40, 41, 42), dass dieser an die Endplatte (30, 35) angrenzt und die beiden Mantelhälften (51, 52; 56, 57) an ihren jeweiligen, einander zugewandten Enden überlappen;
d) sequentielles Positionieren einer vordefinierten Anzahl an Speicherzellen (10) innerhalb eines jeweiligen Isolationsmantels (50, 55), so dass die Speicherzellen (10) mit ihren jeweiligen Hauptflächen (15, 16) aneinander grenzen und mit ihren gegenüberliegenden Stirnseiten an den Isolationsmantel (50, 55) grenzen;
e) mechanische Befestigung der Zuganker (40, 41, 42) an einer zweiten Endplatte (30, 35), um die Speicherzellen (10) einer jeweiligen Speicherzellen-Reihe (60, 61) zwischen den Endplatten zu verspannen;
f) Herstellen elektrischer Verbindungen, so dass eine Gesamtspannung des Energiespeichermoduls zwischen zwei Anschlusskontakten des Energiespeichermoduls abgreifbar ist, welche größer ist als die Spannung einer einzelnen Speicherzelle (10), allerdings nominal unter einer Berührschutzgrenze liegt.

16. Verfahren nach Anspruch 15, **dadurch gekennzeichnet, dass** zumindest auf den den Endplatten (30, 35) zugewandten Seiten des Isolationsmantels (50, 55) ein Kleber aufgebracht wird, um diesen mit der ersten und zweiten Endplatte (30, 35) zu verkleben.

17. Verfahren nach Anspruch 15oder 16, **dadurch gekennzeichnet, dass** die Speicherzellen (10) jeweils zwei Anschlussterminals aufweisen, die gemeinsam auf einer Vorderseite einer jeweiligen Speicherzelle angeordnet sind, wobei in Schritt d) eine Positionierung der Anzahl an Speicherzellen (10) derart erfolgt, dass die Vorderseiten der Speicherzellen (10) in einer Ebene zum Liegen kommen.

18. Verfahren nach Anspruch 17, **dadurch gekennzeichnet, dass** auf eine jeweilige Rückseite der Speicherzellen (10), die parallel zu der Vorderseite angeordnet sind und keine Anschlussterminals aufweisen, ein Wärmeleitblech zur Anbindung an eine Kühleinrichtung aufgebracht wird, wobei das Wärmeleitblech über Wärmeleitkleber mit den Rückseiten der Speicherzellen (10) verbunden wird.

19. Verfahren nach einem der Ansprüche 15bis 18, **dadurch gekennzeichnet, dass** Schritt f) das stoffschlüssige Verbinden einer Zellkontaktierungseinheit (80) mit den Anschlussterminals aller Speicherzellen (10) des Energiespeichermoduls umfasst, wobei die Zellkontaktierungseinheit (80) einen Träger (81) umfasst, an dem mehrere Zellverbinder (82) angeordnet sind, über die ein jeweiliges Anschlussterminal erster Polarität einer Speicherzelle mit einem jeweiligen Anschlussterminal zweiter Polarität einer benachbarten Speicherzelle elektrisch verbunden ist, so dass eine Gesamtspannung des Energiespeichermoduls zwischen zwei Anschlusskontakten der Zellkontaktierungseinheit (80) abgreifbar ist, welche größer ist als die Spannung einer einzelnen Speicherzelle (10), allerdings nominal unter einer Berührschutzgrenze liegt.

20. Verfahren nach Anspruch 19, **dadurch gekennzeichnet, dass** die Zellkontaktierungseinheit (80) mit einem elektrisch isolierenden Deckel (90) als Berührschutz abgedeckt wird.

21. Verfahren nach einem der Ansprüche 15bis 20, **dadurch gekennzeichnet, dass** zumindest ein Energiespeichermodul in ein Speichergehäuse eingebracht und mit diesem mechanisch verbunden wird und zu einer Vorrichtung zur Spannungsversorgung, insbesondere eines Kraftfahrzeugs, verschaltet wird.

## Claims

1. An energy storage module (1) for a device (100) made up of a number of energy storage modules (1) for supplying voltage, especially to a vehicle, wherein the energy storage module (1) is made up of a number of prismatic storage cells (10) stacked in at least one row (60, 61), disposed one behind the other and clamped between two end plates (30, 35) by tie rods (40, 41, 42), wherein each row (60, 61) of storage cells is separated from the end plates (30, 35) and the tie rods (40, 41, 46) by an insulating jacket (50, 55) having electrical insulating properties extending all round the row (60, 61) of storage cells, wherein the electrical insulating properties of the insulating jacket (50, 55) are such that it prevents accidental contact with a voltage obtained by the serial connection of all storage cells (10) in the energy storage module and/or with a voltage obtained by serial connection of the energy storage modules (1), **characterised in that** the insulating jacket (50, 55) is made up of two half-jackets (51, 52; 56, 57) which overlap at their facing ends.

2. An energy storage module according to claim 1, **characterised in that** the insulating jacket (50, 55) is stuck to the end plates (30, 35).

3. An energy storage module according to claim 1 or claim 2, **characterised in that** the insulating jacket (50, 55) is stuck at least to a number of the storage cells (10).

4. An energy storage module according to any of the preceding claims, **characterised in that** an adhesive layer or an adhesive foil or a shrink tube disposed round the storage cells is provided between the storage cells (10) adjoining one another in the row (60, 61) in order to electrically insulate the storage cells (10) from one another.

5. An energy storage module according to any of the preceding claims, **characterised in that** the insulating jacket (50, 55) has heat-insulating properties.

6. An energy storage module according to claim 1, **characterised in that** the length of the overlap is chosen in dependence on the number and/or thickness of the storage cells (10) in a row (60, 61).

7. An energy storage module according to claim 1 or claim 6, **characterised in that** the half-jackets (51, 52; 56, 57) are similar parts.

8. An energy storage module according to any of the preceding claims, **characterised in that** the storage cells (10) in the energy storage module are electrically connected in series and/or in parallel by a cell-contacting unit (80), wherein the cell contacting unit (80) comprises a holder (81) on which a number of cell connectors (82) are disposed, via which a connecting terminal of each storage cell, having a first polarity, is electrically connected to a respective connecting terminal of a neighbouring storage cell having a second polarity, so that a total voltage can be tapped from the energy storage module between two contacts of the cell contacting unit (80), greater than the voltage of each storage cell (10) although rated below an anti-contact limit.

9. An energy storage module according to claim 8, **characterised in that** the cell contacting unit (80) is covered with an electrically insulating lid (90) preventing accidental contact.

10. An energy storage module according to any of the preceding claims, **characterised in that** the storage cells (10) each have two connecting terminals disposed together on a front of the respective storage cell, wherein the fronts of all storage cells (10) are situated in a plane when clamped in the energy storage module.

11. An energy storage module according to claim 10, **characterised in that** the back of each storage cell (10), disposed parallel to the front and without connecting terminals, is coupled to a cooling device.

12. An energy storage module according to any of the preceding claims, **characterised in that** it comprises a number of, especially, two, adjacent rows of storage cells, wherein the tie rods (40, 41, 42) disposed parallel to one another vary in thickness in the direction of the clamping force.

13. An energy storage module according to any of the preceding claims, **characterised in that** the tie rods (40, 41, 42) and the end plates (30, 35) are welded together to provide the clamping force.

14. An energy storage module according to any of the preceding claims, **characterised in that** the tie rods (40, 41, 42) have a height adapted to the height of the end plates (30, 35).

15. A method of producing an energy storage module (1) for a device (100) made up of a number of energy storage modules for supplying voltage, especially to a motor vehicle, wherein the energy storage module (1) is made up of a number of prismatic storage cells (10) stacked in at least one row (60, 61), disposed behind one another and clamped between two end plates (30, 35) by tie rods (40, 41, 42), in the following steps:
a) mechanical fastening of at least two tie rods (40, 41, 42), especially plate shaped, to a first end plate (30, 35) so that each row of storage cells can be disposed between two parallel tie rods (40, 41, 42) extending in the direction of the clamping force;
b) providing an insulating jacket (50, 55) made up of two half-jackets (51, 52; 56, 57) for each row of storage cells (60, 61) and having electrical insulating properties, wherein the electrical insulating properties of the insulating jacket (50, 55) are such that it prevents accidental contact with a voltage obtained by the serial connection of all storage cells (10) in the energy storage module and/or with a voltage obtained by serial connection of the energy storage modules (1);
c) positioning each insulating jacket (50, 55) between two tie rods (40, 41, 42) so that the jacket adjoins the end plate (30, 35) and the two halfjackets (51, 52; 56, 57) overlap at their facing ends;
d) sequential positioning of a preset number of storage cells (10) inside each insulating jacket (50, 55), so that the main surfaces (15, 16) of the storage cells adjoin one another and their opposite sides adjoin the insulating jacket (50, 55);
e) mechanically fastening the tie rods (40, 41, 42) to a second end plate (30, 35) in order to clamp the storage cells (10) in each row (60, 61) between the end plates;
f) producing electrical connections so that a total voltage of the energy storage module between two connecting contacts of the module can be tapped, the voltage being greater than the voltage of an individual storage cell (10), though rated below a limit preventing accidental contact.

16. A method according to claim 15, **characterised in that** an adhesive is applied at least to the sides of the insulating jacket (50, 55) facing the end plates (30, 35) in order to stick the jacket to the first and second end plate (30, 35).

17. A method according to claim 15, or claim 16, **characterised in that** the storage cells (10) each have two connecting terminals disposed together on a front of each storage cell, wherein in step b) the number of storage cells (10) is positioned so that the fronts of the storage cells (10) lie in a plane.

18. A method according to claim 17, **characterised in that** a heat conducting plate for connecting to a cooling device is attached to the back of the each storage cell (10) extending parallel to the front and without connecting terminals, wherein the heat conducting plate is connected to the backs of the storage cells (10) by heat-conducting adhesive.

19. A method according to any of the claims 15 to 18, **characterised in that** step f) comprises autogenous connection of a cell contacting unit (80) to the connecting terminals of all the storage cells (10) in the energy storage module, wherein the cell contacting unit (80) has a holder (81) on which a number of cell connectors (82) are disposed, by means of which each connecting terminal of a storage cell having a first polarity is electrically connected to a respective connecting terminal of a neighbouring storage cell having a second polarity, so that the total voltage which can be tapped from the energy storage module between two connecting contacts of the cell contacting unit (80) is greater than the voltage of an individual storage cell (10), though rated below a limit for preventing accidental contact.

20. A method according to claim 19, **characterised in that** the cell contacting unit (80) is covered by an electrically insulating lid (90) to prevent accidental contact.

21. A method according to any of claims 15 to 20, **characterised in that** at least one energy storage module is disposed in a storage casing and connected mechanically thereto and to a voltage supply device, especially for a motor vehicle.

## Revendications

1. Module d'accumulation d'énergie (1) pour un dispositif (100) d'alimentation en tension en particulier d'un véhicule automobile constitué par un ensemble de modules d'accumulation d'énergie (1), le module d'accumulation d'énergie (1) étant constitué de plusieurs cellules d'accumulation prismatiques (10) qui sont disposées les unes derrière les autres, en étant rassemblées sur au moins une rangée (60, 61), et sont comprimées par des tirants d'ancrage (40, 41, 42) entre deux plaques d'extrémité (30, 35), une rangée de cellules d'accumulation (60, 61) respectives étant séparée des plaques d'extrémité (30, 35) et des tirants d'ancrage (40, 41, 42), par une enveloppe isolante (50, 55) entourant totalement cette rangée de cellules d'accumulation (60, 61) et ayant des propriétés d'isolation électrique les propriétés d'isolation électrique de l'enveloppe isolante étant telles que celle-ci fournisse une protection contre les contacts accidentels dus à une tension consécutive à une connexion en série de toutes les cellules d'accumulation (10) du module d'accumulation d'énergie et/ou à une tension consécutive à une connexion en série du module d'accumulation d'énergie (1),
**caractérisé en ce que**
l'enveloppe isolante (50, 55) est formée par deux demi enveloppes (51, 52, 56, 57) qui se chevauchent par leurs extrémités respectives tournées l'une vers l'autre.

2. Module d'accumulation d'énergie conforme à la revendication 1,
**caractérisé en ce que**
l'enveloppe isolante (50, 55) est collée aux plaques d'extrémité (30, 35).

3. Module d'accumulation d'énergie conforme à la revendication 1 ou 2,
**caractérisé en ce que**
l'enveloppe isolante (50, 55) est collée sur au moins certaines des cellules d'accumulation (10).

4. Module d'accumulation d'énergie conforme à l'une des revendications précédentes,
**caractérisé en ce qu'**
entre des cellules d'accumulation (10) voisines dans la rangée de cellules d'accumulation (60, 61), il est prévu pour permettre l'isolation électrique de ces cellules d'accumulation (10) les unes sous les autres, une couche de colle ou un film de colle ou un tube rétractable appliqué autour des cellules d'accumulation.

5. Module d'accumulation d'énergie conforme à l'une des revendications précédentes,
**caractérisé en ce que**
l'enveloppe isolante (50, 55) présente des propriétés d'isolation thermique.

6. Module d'accumulation d'énergie conforme à la revendication 1,
**caractérisé en ce que**
la longueur du chevauchement est choisie en fonction du nombre et/ou de l'épaisseur des cellules d'accumulation (10) d'une rangée (60, 61) de cellules d'accumulation.

7. Module d'accumulation d'énergie conforme à la revendication 1 ou 6,
**caractérisé en ce que**
les demi enveloppes (51, 52, 56, 57) sont réalisées sous la forme d'éléments semblables.

8. Module d'accumulation d'énergie conforme à l'une des revendications précédentes,
**caractérisé en ce que**
les cellules d'accumulation (10) du module d'accumulation d'énergie sont reliées électriquement les unes aux autres en série et/ou en parallèle par l'intermédiaire d'une unité de mise en contact de cellules (80), cette unité de mise en contact de cellules (80) comportant un support (81) sur lequel sont montés plusieurs éléments de liaison de cellules (82) par l'intermédiaire desquels une borne de liaison respective ayant une première polarité d'une cellule d'accumulation est reliée électriquement à une borne de liaison respective ayant une seconde polarité d'une cellule d'accumulation voisine, de sorte que la tension totale du module d'accumulation d'énergie entre deux contacts de liaison de l'unité de contact de cellules (80) puisse être ajustée à une valeur supérieure à la tension d'une cellule d'accumulation individuelle (10) mais inférieure à une limite de protection contre les contacts accidentels.

9. Module d'accumulation d'énergie conforme à la revendication 8,
**caractérisé en ce que**
l'unité de mise en contact de cellules (80) est recouverte d'un couvercle électriquement isolant (90) faisant office de protection contre les contacts accidentels.

10. Module d'accumulation d'énergie conforme à l'une des revendications précédentes,
**caractérisé en ce que**
les cellules d'accumulation (10) comportent respectivement deux bornes de liaison qui sont situées ensemble sur la face avant d'une cellule d'accumulation respective, les faces avant de toutes les cellules d'accumulation (10) étant situées dans un plan lorsque celles-ci sont comprimées dans le module d'accumulation d'énergie.

11. Module d'accumulation d'énergie conforme à la revendication 10,
**caractérisé en ce que**
les faces arrières respectives des cellules d'accumulation (10) qui sont parallèles aux faces avants et ne comportant pas de bornes de liaison sont accouplées à un dispositif de refroidissement.

12. Module d'accumulation d'énergie conforme à l'une des revendications précédentes,
**caractérisé en ce qu'**
il comporte plusieurs, en particulier deux rangées de cellules d'accumulation situées côte à côte, dans la direction des efforts de compression, des tirants d'ancrage (40, 41, 42) situées parallèles ayant une épaisseur différente.

13. Module d'accumulation d'énergie conforme à l'une des revendications précédentes,
**caractérisé en ce que**
les tirants d'ancrage (40, 41, 42) et les plaques d'extrémité (30, 35) sont soudés pour obtenir la force de compression.

14. Module d'accumulation d'énergie conforme à l'une des revendications précédentes,
**caractérisé en ce que**
les tirants d'ancrage (40, 41, 42) ont une hauteur adaptée à la hauteur des plaques d'extrémité (30, 35).

15. Procédé d'obtention d'un module d'accumulation d'énergie (1) pour un dispositif (100) d'alimentation en tension en particulier d'un véhicule automobile, constitué par un ensemble de modules accumulateurs d'énergie (1) selon lequel le module d'accumulation d'énergie (1) est constitué de plusieurs cellules d'accumulation prismatiques (10) qui sont disposées les unes derrière les autres en étant rassemblées en au moins une rangée (60, 61) et sont comprimées entre deux plaques d'extrémité (30, 35) par des tirants d'ancrage (40, 41, 42), comprenant les étapes suivantes :
a) fixation mécanique d'au moins deux tirants d'ancrage (40, 41, 42) en particulier en forme de plaque sur une première plaque d'extrémité (30, 35) de sorte que chaque rangée de cellules d'accumulation puisse être positionnée entre deux tirants d'ancrage (40, 41, 42) s'étendant parallèlement dans la direction de force de compression,
b) préparation d'une enveloppe isolante (50, 55) formée de deux demi enveloppes (51, 52, 56, 57) par rangée de cellules d'accumulation (60, 61) ayant des propriétés d'isolation électrique, les propriétés d'isolation électrique de l'enveloppe isolante (50, 55) étant telles qu'elle fournisse une protection contre les contacts accidentels dus à une tension consécutive à une connexion en série de toutes les cellules d'accumulation (10) du module d'accumulation d'énergie et/ou à une tension consécutive à une connexion en série du module d'accumulation d'énergie (1),
c) positionnement d'une enveloppe isolante (50, 55) respective entre deux tirants d'ancrage (40, 41, 42) de sorte que celle-ci soit voisine des plaques d'extrémité (30, 35) et que les deux demi enveloppes (51, 52, 56, 57) se chevauchent au niveau de leurs extrémités tournées l'une vers l'autre respectives,
d) positionnement séquentiel d'un nombre prédéfini de cellules d'accumulation (10) dans une enveloppe isolante respective (50, 55) de sorte que les cellules d'accumulation (10) soient contigües par leurs faces principales respectives (15, 16) et soient contigües à l'enveloppe isolante (50, 55), par leurs faces frontales opposées,
e) fixation mécanique des tirants d'ancrage (40, 41, 42) sur une seconde plaque d'extrémité (30, 35) pour comprimer les cellules d'accumulation (10) d'une rangée de cellules d'accumulation (60, 61) respective entre les plaques d'extrémité,
f) réaliser de connexions électriques de sorte que la tension totale du module d'accumulation d'énergie entre deux contacts de liaison de ce module d'accumulation d'énergie puisse être ajustée à une valeur supérieure à la tension d'une cellule d'accumulation (10) individuelle, mais inférieure à une limite de protection contre les contacts accidentels.

16. Procédé conforme à la revendication 15,
**caractérisé en ce qu'**
une colle est appliquée au moins sur les faces de l'enveloppe isolante (50, 55) tournées vers les plaques d'extrémité (30, 35) pour permettre de les coller à la première et à la seconde plaque d'extrémité (30, 35).

17. Procédé conforme à la revendication 15 ou 16,
**caractérisé en ce que**
les cellules d'accumulation (10) comportent respectivement deux bornes de liaison qui sont montées ensemble sur la face avant d'un cellule d'accumulation respective, lors de l'étape d) le positionnement des cellules d'accumulation (10) étant effectué de sorte que les faces avant des cellules d'accumulation (10) soient situées dans un plan.

18. Procédé conforme à la revendication 17,
**caractérisé en ce que**
sur la face arrière respective des cellules d'accumulation (10) qui est parallèle à la face avant et ne comporte pas de bornes de liaison, est appliquée une tôle thermiquement conductrice destinée à être reliée à un dispositif de refroidissement, cette tôle thermiquement conductrice étant reliée par une colle thermiquement conductrice aux faces arrières des cellules d'accumulation (10).

19. Procédé conforme à l'une des revendications 15 à 18,
**caractérisé en ce que**
l'étape f) comprend la liaison par la matière d'une unité de mise en contact de cellules (80) avec les bornes de liaison de toutes les cellules d'accumulation (10) du module d'accumulation d'énergie, l'unité de mise en contact de cellules (80) comprenant un support (81) sur lequel sont montés plusieurs éléments de liaison de cellules (82) par l'intermédiaire desquels une borne de liaison respective ayant une première polarité d'une cellule d'accumulation est reliée électriquement à une borne de liaison respective ayant une seconde polarité d'une cellule d'accumulation voisine de sorte que la tension totale du module d'accumulation d'énergie entre deux contacts de liaison de l'unité de mise en contact de cellules (80) puisse être ajustée à une valeur supérieure à la tension d'une cellule d'accumulation individuelle (10) mais inférieure à une limite de protection contre les contacts accidentels.

20. Procédé conforme à la revendication 19,
**caractérisé en ce que**
l'unité de mise en contact de cellules (80) est recouverte par un couvercle électriquement isolant (90) faisant office de protection contre les contacts accidentels.

21. Procédé conforme à l'une des revendications 15 à 20,
**caractérisé en ce qu'**
au moins un module accumulateur d'énergie est monté dans un boitier d'accumulation est relié mécaniquement à celui-ci, et est connecté à un dispositif d'alimentation en tension en particulier d'un véhicule automobile.
